# DEMANDE DE BREVET EUROPEEN

(11) **EP 4 400 363 A1**
(43) Date de publication de la demande: **17.07.2024**
(21) Numéro de dépôt: 23307094.5
(22) Date de dépôt: 30.11.2023
(51) Int. Cl.: B60N 2/70, B60N 2/72

(54) **COUSSIN MODULAIRE D'ASSISE, ET ENSEMBLE DE SIÈGE COMPRENANT UN TEL COUSSIN**

(30) Priorité: 03.01.2023 FR 2300038
(71) Demandeur: FAURECIA Sièges d'Automobile, 92000 Nanterre (FR)
(72) Inventeur: REITH, Carsten, 31712 NIEDERNWÖHREN (DE); PHARATE, Abhijeet, 411027 PUNE (IN); KETELS, Cédric, WHITE LAKE MICHIGAN, 48386 (US); DURIEZ, Didier, 91220 LE PLESSIS-PÂTÉ (FR); GATHIBANDHE, Swapnil, 442001 MAHARASHTRA (IN); MICHAUD, Marine, 75006 PARIS (FR)
(74) Mandataire: Plasseraud IP

(57) **Abrégé**

La présente divulgation est relative à un coussin modulaire d'assise (1), configuré pour être fixé à une structure de siège (2) présentant une structure d'assise comprenant deux flasques latéraux (20) entretoisés par un tube avant (21), transversal, et un tube arrière (22), transversal,
ledit coussin modulaire d'assise comprenant à l'état assemblé:
- une base (10), comprenant un système d'interface mécanique pour la fixation sur la structure d'assise,
- une matelassure (11) reposant sur une surface supérieure de la base
- un revêtement d'habillage (12) recouvrant la matelassure,

## Description

La présente divulgation est relative à un coussin modulaire d'assise, configuré pour être fixé à une structure de siège présentant une structure d'assise, ainsi qu'un ensemble de siège comprenant un coussin modulaire d'assise selon la présente divulgation et une structure de siège présentant une structure d'assise, ladite structure d'assise présentant deux flasques latéraux entretoisés par un tube avant, transversal, et un tube arrière, transversal.

La présente divulgation concerne encore un procédé d'obtention d'un ensemble de siège selon la présente divulgation, ainsi qu'un procédé de maintenance d'un ensemble de siège selon la présente divulgation.

### Domaine technique

La présente divulgation relève du domaine des siège de véhicule.

### Technique antérieure

L'état de la technique des sièges des véhicules, connait une conception de siège qui nécessite d'assembler les différents composants du siège en un site, typiquement selon une fabrication juste à temps connue sous l'abréviation anglaise « *JIT* » pour « *Just-In Time manufacturing ».*

La structure du siège comprend une structure de siège typiquement métallique qui comprend classiquement une structure d'assise et une structure de dossier.

La structure de siège peut comporter :
- deux glissières, droite et gauche, comprenant chacune un profilé inférieur, typiquement femelle, fixe par rapport à un plancher, et un profilé supérieur, mâle, monté coulissant par rapport au profilé inférieur, typiquement suivant une direction X qui peut être la direction d'avance du véhicule,
- une structure d'assise qui comprend classiquement deux flasques, droite et gauche, entretoisés par des tubes, et en particulier un tube avant entretoisant les flasques, sur une portion avant de la structure d'assise et un tube arrière entretoisant les flasques sur une portion arrière de la structure d'assise, les tubes avant et arrière s'étendant de manière parallèle, suivant une direction transversale,
- une pièce de nez, métallique qui relie des extrémités avant des flasques et est conformée pour former une surface de support pour le soutien du coussin d'assise.

La hauteur de la structure d'assise, à savoir de l'ensemble qui comprend les flasques et la pièce de nez peut être typiquement réglée par un système de réhausse qui peut comprendre une paire de biellettes avant, droite et gauche, reliant le tube avant et les profilés supérieurs des glissières droite et gauche, et une paire de biellettes arrière, droite et gauche, reliant le tube arrière et les profilés supérieurs des glissières, droite et gauche.

L'assise d'un tel siège comprend encore un système de suspension typiquement à fils ressorts, reliant la pièce de nez, à une partie arrière de la structure assise, mais encore, une matelassure d'assise, typiquement en mousse polyuréthane expansée, et un revêtement d'habillage venant recouvrir la matelassure en mousse.

En fonction des options qui peuvent être choisies par l'utilisateur final, différents équipements de confort peuvent être prévus, tels que notamment une nappe chauffante résistive, un système de massage, ou encore un système de ventilation, voire un mécanisme de coulissement venant se fixer au-dessus de la pièce de nez de sorte à pouvoir régler l'avancement d'une partie avant du coussin, et par rapport à une portion arrière du coussin, fixe.

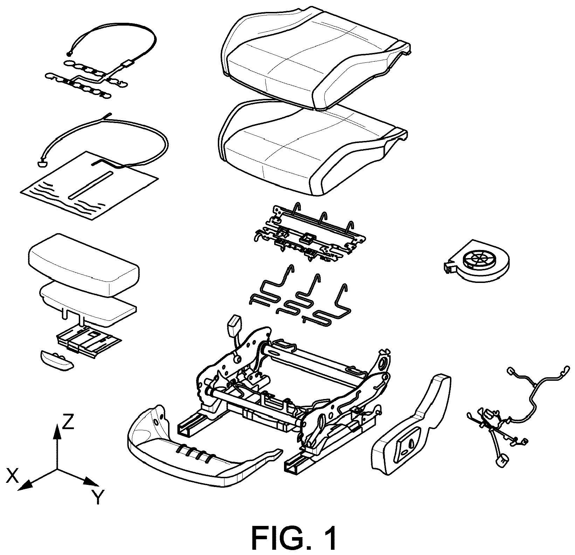

Une conception d'un siège selon la figure 1 nécessite d'assembler, typiquement manuellement, un grand nombre de composants sur le site d'assemblage final du véhicule, ce qui peut ne pas être optimal économiquement lorsque le site d'assemblage dispose d'une main d'oeuvre à cout élevé.

Les sièges modernes, en particulier des véhicules automobiles de finitions supérieures, peuvent être équipés de fonctions supplémentaires, telles qu'une fonction de chauffage, de massage, ou de ventilation.

Ces équipements sont intégrés en usine lors de la fabrication du siège, puis surmontés des coussins avec leur matelassure et revêtements. Le siège ainsi assemblé est ensuite fixé au plancher du véhicule.

Selon les constatations des inventeurs, et dans les véhicules automobiles équipés de tels sièges, et lorsque le siège n'est pas pourvu dès l'origine d'un tel équipement de confort, la conception des sièges connus de l'état de la technique ne permet pas de démonter le siège au sein même du véhicule, c'est dire sans démonter le siège du plancher du véhicule, en vue de procéder à l'amélioration du siège par l'ajout d'une fonction supplémentaire de chauffage, de ventilation, ou de massage. En effet, l'ajout d'un tel équipement nécessiterait de sortir le siège du véhicule pour retirer les revêtements et la matelassure, ce retrait étant nécessaire à un tel ajout.

On connait toutefois par exemple du document US 9,796,310 B1 d'autres fabrications de siège qui comprennent le pré-assemblage, typiquement sur un site distinct du site d'assemblage final du véhicule, d'un module, et en particulier un coussin modulaire d'assise. Ce coussin modulaire comprend, à l'état assemblé, une base, une matelassure et un revêtement d'habillage. Il peut être typiquement transporté jusqu'au site d'assemblage final en vue de son assemblage sur la structure.

De manière notable, une pièce de nez de la base, composite est articulée à un corps de base, autour d'un axe transversal du siège, la pièce de nez comprenant un ensemble de crochet venant se fixer sur le tube avant. Selon US 9 796 310, en cas d'impact frontal, la rotation possible entre la pièce de nez et la base participe à la dissipation de l'énergie lors de l'impact, et supporte favorablement les hanches afin d'éviter un sous marinage.

Selon les constatations de la Demanderesse, la fixation du module à la structure de siège peut être améliorée.

### Résumé

La présente divulgation est relative à un coussin modulaire d'assise, configuré pour être fixé à une structure de siège présentant une structure d'assise comprenant deux flasques latéraux entretoisés par un tube avant, transversal, et un tube arrière, transversal,
ledit coussin modulaire d'assise comprenant, à l'état assemblé:
   - une base comprenant un système d'interface mécanique pour la fixation sur la structure d'assise,
   - une matelassure reposant sur une surface supérieure de la base
   - un revêtement d'habillage recouvrant la matelassure,
et dans lequel ledit système d'interface mécanique comprend :
   - une interface mécanique arrière sur une partie arrière de la base, comprenant un premier logement, ouvert, configuré pour loger le tube arrière, de manière pivotable autour du tube arrière,
   - une interface mécanique avant, sur une partie avant de la base, configurée pour loger le tube avant, dans un deuxième logement, ouvert, de manière verrouillable mécaniquement par un système de verrouillage de l'interface mécanique avant,
et dans lequel ledit système d'interface mécanique est configuré pour autoriser la fixation du coussin modulaire d'assise par les étapes suivantes :
   /A/ mise en regard de l'interface mécanique arrière avec le tube arrière et insertion du tube arrière dans le premier logement et
   /B/ pivotement du coussin modulaire autour du tube arrière alors emboité dans le premier logement de l'interface mécanique arrière jusqu'à une insertion du tube avant dans le deuxième logement de l'interface mécanique avant ,et verrouillage mécanique du tube avant dans le deuxième logement par ledit système de verrouillage de l'interface mécanique avant.

Un tel coussin modulaire d'assise selon la présente divulgation offre les avantages suivants, par rapport à l'état de la technique connu de la Demanderesse, et en particulier :

Un assemblage simplifié du coussin modulaire d'assise sur la structure, avec en particulier une cinématique d'assemblage et de verrouillage du coussin modulaire d'assise sur la structure d'assise en deux points de fixation seulement, consistant respectivement en le tube avant et le tube arrière de la structure.

Une telle cinématique d'assemblage et de verrouillage est rapide et intuitive pour les opérateurs offrant des temps de cycles courts. Une telle cinématique d'assemblage et de verrouillage, comprenant en /A/ un emboîtement préalable du tube arrière dans le premier logement de l'interface mécanique arrière (à savoir avant le verrouillage du tube avant par le système de verrouillage de l'interface mécanique avant) limite par ailleurs les efforts de manipulation et de portage du coussin modulaire d'assise par l'opérateur : Une telle conception diminue avantageusement les risques de troubles musculosquelettiques.

Encore un tel mode d'assemblage en ces deux points de fixation seulement consistant en les tubes avant et arrière peut permettre d'assurer une universalité de l'assemblage du coussin modulaire d'assise à des structures d'assise de différentes conceptions, tant que les structures d'assise présentent les deux tubes avant et arrière, et même si les structures présentent des conceptions de différentes, et par exemple des dessins de flasques différents.

Une telle cinématique d'assemblage et de verrouillage de coussin modulaire d'assise peut encore permettre une maintenance aisée, et en particulier un démontage rapide du coussin modulaire d'assise, en particulier sans démontage de la structure d'assise d'un plancher du véhicule.

Selon des caractéristiques optionnelles de la présente divulgation, prises seules ou en combinaison :
- ledit système de verrouillage peut être élastiquement déformable, configuré pour autoriser un verrouillage élastique de sorte que le verrouillage du tube avant dans le deuxième logement est obtenu, en fin de course lors du pivotement en /B/ du coussin modulaire autour du tube arrière, par déformation élastique du système de verrouillage.
- le premier logement peut être un logement en U, et/ou le deuxième logement peut être logement en U.
- le premier logement notamment en U peut déboucher vers l'arrière de la base selon un sens arrière orienté de la portion avant vers la portion arrière de la base, le premier logement notamment en U présentant une paroi latérale supérieure et une paroi latérale inférieure opposées, ainsi qu'une paroi de fond, ledit logement notamment en U configuré de sorte à assurer un maintien stable du tube arrière contre la paroi fond lorsque la base exerce un effort sur le tube arrière dirigé selon le sens arrière, le tube arrière alors bloqué selon une direction perpendiculaire à la base entre la paroi latérale supérieure et la paroi latérale inférieure.
- la base peut être est un corps, de préférence mince, qui s'étend d'un bord arrière à un bord avant, et d'un premier bord latéral à un deuxième bord latéral, et dans lequel le premier logement notamment en U débouche vers l'arrière de la base, et le deuxième logement notamment en U débouche vers le dessous, et dans lequel le premier logement comprend une première direction d'insertion pour le tube arrière et le deuxième logement comprend une deuxième direction d'insertion pour le tube avant, et dans lequel la première direction d'insertion et la deuxième direction d'insertion sont inclinées l'une par rapport à l'autre d'un angle compris entre 45° et 90°.
- la base peut être un corps obtenu par moulage par injection, et dans lequel ladite interface mécanique avant et ladite interface mécanique arrière sont agencées respectivement sur la partie avant et arrière de la base, d'un seul tenant avec le corps, lesdites interfaces mécaniques arrière et avant étant obtenues lors du moulage par injection.
- selon un mode de réalisation, le système de verrouillage de ladite interface mécanique avant peut comprendre un organe de verrouillage, articulé par une charnière, souple, à une extrémité proximale au corps de la base par rapport au deuxième logement et présentant une dent de verrouillage à son extrémité distale, ainsi qu'une came solidaire de l'organe de verrouillage, et dans lequel ledit organe de verrouillage est configuré pour passer d'une position déverrouillée, laissant ouverte le deuxième logement jusqu'à une position verrouillée obturant le deuxième logement, de sorte qu'à l'étape /B/ le tube avant vient engager avec la came, lors de son insertion dans le deuxième logement, en provoquant le déplacement de l'organe de verrouillage autour de la charnière de la position déverrouillée jusqu'à la position verrouillée au cours duquel ledit organe de verrouillage se déforme élastiquement en passant une contre-dent de l'interface mécanique, solidaire de la base et jusqu'à la position verrouillé pour laquelle ledit organe de verrouillage se détend au moins partiellement dans une position où la dent de verrouillage et la contre-dent coopèrent pour interdire le déverrouillage de l'organe de verrouillage dans une position où l'organe de verrouillage maintient prisonnier ledit tube avant dans le deuxième logement.
- selon un mode de réalisation, le système de verrouillage de ladite interface mécanique avant peut comprendre une gorge du deuxième logement déformable élastiquement, ladite gorge présentant une entrée de gorge de dimension inférieure au diamètre du tube avant, la gorge présentant une section intérieure ajustée à la section du tube avant de dimension supérieure à l'entrée de gorge configurée de sorte que lors du pivotement en /B/ le tube avant vient s'insérer dans l'entrée de gorge en la déformant élastiquement, et qu'une fois le tube avant reçu dans le deuxième logement de l'interface mécanique avant, l'entrée de gorge revient élastiquement en position en assurant le maintien du tube avant, verrouillé élastiquement dans le deuxième logement
- selon un mode de réalisation, la base peut être un corps moulé par injection et dans lequel la base comprend un système de suspension sur une portion centrale de la base entre un premier bord latéral et un deuxième bord latéral du corps et dans lequel le système de suspension est obtenu lors du moulage par injection, et consiste en une portion élastique ajourée de la base, s'étendant, sur une portion centrale, entre le premier bord latéral et le deuxième bord latéral à proximité du bord arrière par comparaison au bord avant
- selon un mode de réalisation, la base peut comprendre un système de suspension sur une portion centrale de la base entre un premier bord latéral et un deuxième bord latéral du corps et dans le système de suspension comprend :
   - une portion ajourée de la base, s'étendant, sur une portion centrale, entre le premier bord latéral et le deuxième bord latéral à proximité du bord arrière par comparaison au bord avant,
   - un système ressort, métallique, couvrant la portion ajourée, fixé au corps de la base de part et d'autre de la portion ajourée.

Selon un mode de réalisation, la matelassure peut comprendre :
- une portion centrale, s'étendant depuis un bord arrière et jusqu'à un bord avant de la base,
- une première matelassure latérale, formant un premier bord relevé, et
- une deuxième matelassure latérale formant un deuxième bord relevé,
et dans lequel la première matelassure et la deuxième matelassure sont agencées de part et d'autre de la portion centrale.

Selon un mode de réalisation, la première matelassure latérale et la deuxième matelassure latérale sont des éléments indépendants et amovibles par rapport à la portion centrale de la matelassure.

Selon un mode de réalisation, le coussin modulaire peut encore comprendre à l'état assemblé, tout ou partie des composants suivants :
- une nappe électrique chauffante, résistive, et/ou
- un système de ventilation électrique, configuré pour souffler de l'air au travers d'évents dans ladite base, et/ou
- un système de massage, comprenant un ou plusieurs actionneurs mécaniques, et/ou
- un système d'exciteur haptique, comprenant un ou plusieurs exciteurs configuré(s) pour générer des vibrations dans ladite base.

La présente divulgation concerne encore un ensemble de siège comprenant un coussin modulaire d'assise selon la présente divulgation et une structure de siège présentant une structure d'assise comprenant deux flasques latéraux entretoisés par un tube avant, transversal, et un tube arrière, transversal, et dans lequel,
ledit coussin modulaire d'assise comprenant, à l'état assemblé:
   - ladite base, comprenant le système d'interface mécanique pour la fixation sur la structure d'assise,
   - ladite matelassure reposant sur la surface supérieure de la base,
   - le revêtement d'habillage recouvrant la matelassure,
et dans lequel ledit système d'interface mécanique comprend :
   - ladite interface mécanique arrière, sur la partie arrière de la base, comprenant le premier logement, ouvert, configuré pour loger le tube arrière, de manière pivotable autour du tube arrière,
   - ladite interface mécanique avant, sur une partie avant de la base, configurée pour loger le tube avant, dans le deuxième logement, ouvert, de manière verrouillable par le système de verrouillage, et dans lequel ledit système d'interface mécanique est configuré pour autoriser la fixation du coussin modulaire par les étapes suivantes :
      /A/ mise en regard de l'interface mécanique arrière avec le tube arrière et insertion du tube arrière dans le premier logement et
      /B/ pivotement du coussin modulaire autour du tube arrière emboité dans le premier logement de l'interface mécanique arrière jusqu'à insertion du tube avant dans le deuxième logement de l'interface mécanique avant et verrouillage mécanique du tube avant dans le deuxième logement par le système de verrouillage.

La présente divulgation concerne encore un procédé d'obtention d'un ensemble de siège selon la présente divulgation, à l'état assemblé, comprenant les étapes suivantes :
- fourniture d'un coussin modulaire d'assise comprenant à l'état assemblé au moins une base comprenant un système d'interface mécanique pour la fixation sur la structure d'assise, une matelassure reposant sur une surface supérieure de la base et un revêtement d'habillage recouvrant la matelassure, ledit système d'interface mécanique comprenant une interface mécanique arrière, sur une partie arrière de la base, comprenant un premier logement configuré pour loger le tube arrière, de manière pivotable autour du tube arrière, et une interface mécanique avant sur une partie avant de la base, configurée pour loger le tube avant, dans un deuxième logement de manière verrouillable,
- fourniture d'une structure de siège, à l'état assemblé, comprenant une structure d'assise et une structure de dossier, la structure d'assise comprenant deux flasques latéraux entretoisés par un tube avant, transversal, et un tube arrière, transversal,
- assemblage du coussin modulaire à ladite structure de siège par mise en oeuvre des étapes suivantes :
   /A/ mise en regard de l'interface mécanique arrière avec le tube arrière et insertion du tube arrière dans le premier logement et
   /B/ pivotement du coussin modulaire autour du tube arrière alors emboité dans le premier logement de l'interface mécanique arrière jusqu'à insertion du tube avant dans le deuxième logement de l'interface mécanique avant et verrouillage par un système de verrouillage de l'interface mécanique avant.

La procédé de maintenance d'un ensemble de siège selon la présente divulgation, comprenant le désassemblage du coussin modulaire de la structure de siège, sans démontage de la structure de siège à un plancher du véhicule, par la mise en oeuvre des étapes suivantes :
ICI déverrouillage du système de verrouillage, libération du tube avant de l'interface mécanique avant et rotation du coussin modulaire autour du tube arrière logé dans le premier logement jusqu'à obtenir l'échappement du tube avant en dehors du deuxième logement, et successivement
/D/ retrait du coussin modulaire par extraction du tube arrière du premier logement de l'interface mécanique arrière.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] est une vue d'un ensemble d'assise qui comprend, selon une vue éclatée, une structure d'assise qui comprend des flaques latéraux entretoisés par des tube avant et arrière, ainsi une traverse avant destinée à être fixée au flasque au-dessus du tube avant, la traverse étant conformée pour former une surface d'appui pour supporter une assise qui comporte de nombreux composants, tels qu'une suspension à ressort métallique, une matelassure comportant une portion centrale et des bords relevées, un revêtement d'assise destiné à couvrir la matelassure, les composants du coussin d'assise pouvant comprendre, en option, des équipements de confort, tels qu'une nappe résistive, chauffante, et/ou un système de massage, et ou un système de ventilation comprenant un ventilateur électrique, la conception de l'ensemble d'assise étant adaptée pour une fabrication juste à temps connue sous l'abréviation anglaise « JIT » pour (« Just In Time » manufacturing).
**Fig. 2**

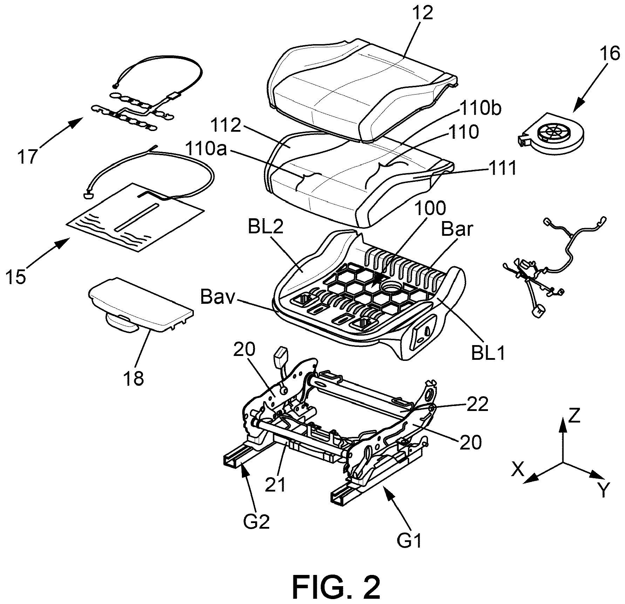

   [Fig. 2] est une vue montrant à nouveau la même structure d'assise que la figure 1 et le pré-assemblage d'un coussin modulaire d'assise qui présente pour composants essentiels, une base moulée, une matelassure, et de préférence un revêtement d'habillage, voire encore optionnellement, une nappe chauffante, résistive, et/ou un système de massage comprenant un ou plusieurs actionneurs, et/ou un ventilateur d'un système de ventilation, ce pré-assemblage pouvant être opéré sur un premier site de fabrication, et en vue d'être acheminé sur le site d'assemblage final du véhicule où le coussin modulaire d'assise est assemblé à la structure de siège.
**Fig. 3**

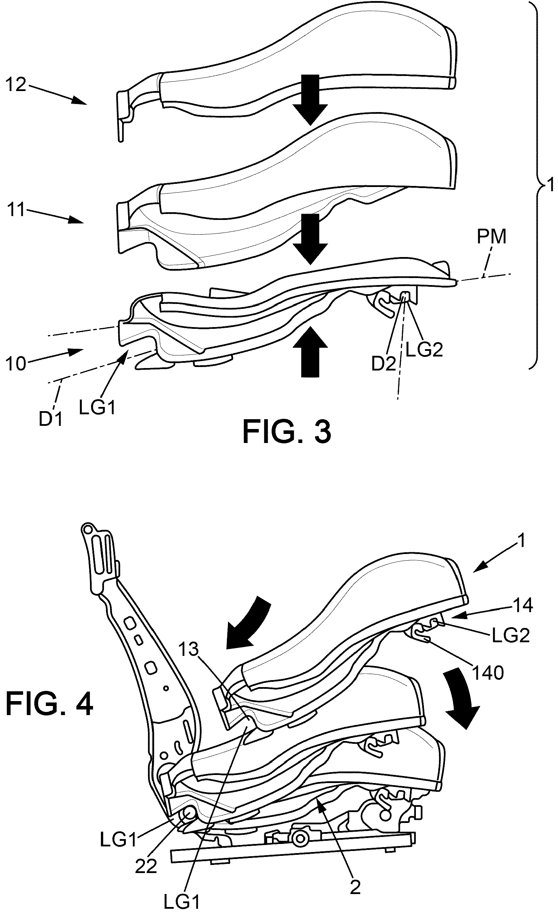

   [Fig. 3] est une vue de l'assemblage du coussin modulaire d'assise et en particulier de ses trois composants principaux, à savoir la base, la matelassure, et le revêtement d'habillage, ladite base, typiquement moulée par injection, présentant une interface mécanique arrière comportant une premier logement en U configuré pour recevoir de manière pivotante un tube arrière de la structure, entretoisant deux flasques de la structure d'assise, et une interface mécanique avant, comprenant un deuxième logement pour un tube avant de la structure d'assise, entretoisant les deux flasque, ladite interface mécanique avant autorisant le verrouillage du tube avant par déformation élastique de ladite interface mécanique avant.
**Fig. 4**
   [Fig. 4] est une vue de la méthode d'assemblage du coussin modulaire d'assise (à l'état assemblé) à la structure du siège qui comprend pour étapes :
   - une mise en regard de l'interface mécanique arrière au droit de tube arrière et une insertion du tube arrière dans le premier logement en U et,
   - un pivotement du coussin modulaire autour du tube arrière alors emboité dans le premier logement en U de l'interface mécanique arrière jusqu'à une insertion du tube avant dans le deuxième logement en U de l'interface mécanique avant, et verrouillage par déformation élastique de l'interface mécanique avant.
**Fig. 5**

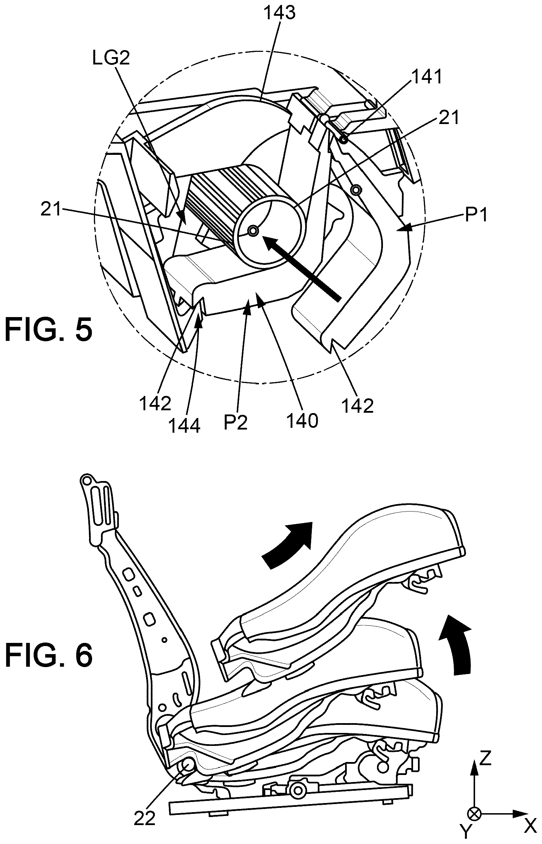

   [Fig. 5] est une vue de détail d'un organe de verrouillage, élastiquement déformable de l'interface mécanique avant, configuré pour passer d'une position déverrouillée jusqu'à une position verrouillée lorsqu'une came est entrainée par le tube avant, en provoquant le déplacement de l'organe de verrouillage autour d'une charnière de la position déverrouillée jusqu'à la position verrouillée, déplacement au cours duquel ledit organe de verrouillage se déforme élastiquement en passant une contre-dent de l'interface mécanique, solidaire de la base et jusqu'à la position verrouillée pour laquelle ledit organe élastique se détend au moins partiellement dans une position où la dent de verrouillage et la contre-dent coopèrent pour interdire le déverrouillage de l'organe de verrouillage dans une position où l'organe de verrouillage maintient prisonnier ledit tube avant dans le deuxième logement.
**Fig. 6**
   [Fig. 6] est une vue consécutive illustrant le désassemblage par :
   - déverrouillage du tube avant par déformation élastique de l'interface mécanique avant et rotation du coussin modulaire autour du tube arrière logé dans le premier logement jusqu'à obtenir l'échappement du tube avant en dehors du deuxième logement en U, et successivement
   - retrait du coussin modulaire par extraction du tube arrière du premier logement de l'interface mécanique arrière.
**Fig. 7**

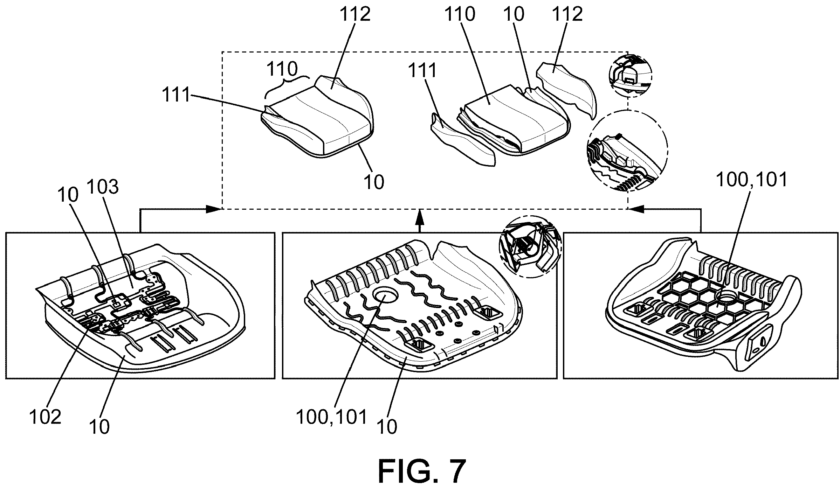

   [Fig. 7] est vue de différentes conceptions des composant du coussin modulaire d'assise, et en particulier en haut:
   - une première conception, de la matelassure à gauche pour laquelle la portion centrale de la matelassure, d'une part, et la première matelassure latérale et la deuxième matelassure latérale, d'autre part, forment une matelassure d'un seul tenant,
   - une deuxième conception de la matelassure, à droite, pour laquelle la portion centrale de la matelassure, d'une part, et la première matelassure latérale et la deuxième matelassure latérale, d'autre part, sont des éléments amovibles, qui peuvent être changés indépendamment lorsqu'usés et en bas, trois conceptions de la dite base, avec à gauche une suspension comprenant un système à ressort élastique, métallique, et au milieu et à droite une conception dans laquelle la suspension est constituée par une partie ajourée élastique du cors thermoformable de la base.

### Description des modes de réalisation

La présente divulgation est relative à un coussin modulaire d'assise 1, configuré pour être fixé à une structure de siège 2 présentant une structure d'assise comprenant deux flasques latéraux 20 entretoisés par un tube avant 21, transversal, et un tube arrière 22, transversal.

Le coussin modulaire d'assise comprend, à l'état assemblé, au moins les composants suivants :
- une base 10, comprenant un système d'interface mécanique pour la fixation sur la structure d'assise,
- une matelassure 11 reposant sur une surface supérieure de la base, et éventuellement
- un revêtement d'habillage 12 recouvrant la matelassure.

La base 10, est un corps, de préférence mince, qui s'étend d'un bord arrière Bar jusqu'à un bord avant Bav typiquement selon la direction X, et d'un premier bord latéral BL1 jusqu'à un deuxième bord latéral BL2 selon la direction transversale. La base peut être typiquement un corps moulé d'un seul tenant, typiquement par les techniques de moulages par injection. La matelassure 11 repose sur la surface supérieure de la base.

Le profil du corps, vue selon une coupe passant par un plan XZ, peut être un profil montant, en condition normale d'utilisation du siège du véhicule, lorsqu'on se déplace depuis le bord arrière Bar, et vers le bord avant Bav, en particulier jusqu'au bord avant du corps. Un tel profil montant, assure un maintien des hanches de l'utilisateur assis dans le siège, en limitant les risques de sous-marinage en cas de choc frontal.

Le profil du corps, vue selon une coupe passant par un plan YZ, peut être concave, le premier bord latéral BL1, et le deuxième bord latéral BL2 étant relevés suivant la direction Z, par rapport à une portion centrale du corps entre les deux bords latéraux BI1, BI2.

La base 10 peut comprendre un système de suspension 100 prévu typiquement sur une portion centrale de la base 10 entre le premier bord latéral BL1 et le deuxième bord latéral BL2 du corps.

Selon un mode de réalisation illustré à droite, et au centre à la figure 7, le système de suspension 100 est obtenu lors du moulage par injection, et peut consister en une portion élastique 101 ajourée de la base, s'étendant typiquement, sur une portion centrale, entre le premier bord latéral BL1 et le deuxième bord latéral BLI2 à proximité du bord arrière Bar par comparaison au bord avant Bav, à savoir que le système de suspension se situe, en particulier suivant la direction X, plus proche du bord arrière Barque du bord avant Bav.

Selon un autre mode de réalisation, la base 10 peut comprendre un système de suspension 100 qui s'étend typiquement sur une portion centrale de la base entre un premier bord latéral et un deuxième bord latéral du corps.

Le système de suspension 10 peut comprendre :
- une portion ajourée 102 de la base, s'étendant, sur une portion centrale, entre le premier bord latéral et le deuxième bord latéral à proximité du bord arrière par comparaison au bord avant
- un système ressort 103, métallique, couvrant la portion ajourée, fixé au corps de la base de part et d'autre de la portion ajourée 102.

De manière notable, ledit système d'interface mécanique comprend :
- une interface mécanique arrière 13 sur une partie arrière de la base 10, comprenant un premier logement LG1 ouvert configuré pour loger le tube arrière, de manière pivotable autour du tube arrière 22,
- une interface mécanique avant 14, sur une partie avant de la base 10, configurée pour loger le tube avant 21, dans un deuxième logement LG2 ouvert. L'interface mécanique avant comprend encore un système de verrouillage, mécanique, configuré pour assurer le verrouillage du tube avant 21, dans le deuxième logement LG2.

Le premier logement LG1 arrière a pour fonction d'autoriser en /A/, l'insertion du tube arrière 22, et d'autoriser le pivotement du coussin modulaire assise autour du tube arrière 22, de manière sûre, alors que ce tube arrière 22 est emboité dans le premier logement LG1.

Un fois le tube avant 21 reçu dans le deuxième logement LG2 et verrouillé, la conception du premier logement LG1 interdit un échappement du tube arrière 22 qui est bloqué dans le premier logement LG1.

Le premier logement LG1 peut être typiquement un logement en U (ou en C) présentant une paroi de fond et de parois latérales, et/ou le deuxième logement LG2 peut être typiquement un logement en U (ou en C) présentant une paroi de fond et des parois latérales. Toutefois d'autres formes de logements peuvent être envisagées pour le premier logement LG1 et/ou le deuxième logement LG2, par exemple des logements de sections polygonales, par exemple rectangulaires, pentagonales ou autres.

De manière générale, le premier logement notamment en U, repéré LG1 peut déboucher vers l'arrière de la base 10 selon un sens arrière orienté de la portion avant vers la portion arrière de la base 10. Le premier logement notamment en U repéré LG1 présente une paroi latérale supérieure et une paroi latérale inférieure opposées, ainsi qu'une paroi de fond. Un tel premier logement notamment en U est configuré de sorte à assurer un maintien stable du tube arrière 22 contre la paroi fond lorsque la base 10 exerce un effort sur le tube arrière 22 dirigé selon le sens arrière, le tube arrière 22 alors bloqué selon une direction perpendiculaire à la base entre les parois latérales inférieure et supérieure.

Le premier logement notamment en U LG1 peut déboucher vers l'arrière, sensiblement suivant la direction d'un plan moyen PM, suivant une direction légèrement inclinée par rapport au plan moyen de la base 2, typiquement de + ou - 30°. Le deuxième logement notamment en U LG2 peut déboucher vers le dessous typiquement suivant une direction perpendiculaire à au plan moyen PM de la base, ou légèrement incliné par rapport à ce plan typiquement de + ou - 30°.

Ainsi, le premier logement LG1 notamment en U peut comprendre une première direction d'insertion D1 pour le tube arrière 22, s'étendant suivant la direction d'un plan moyen PM, suivant une direction légèrement inclinée par rapport au plan moyen de la base 2, typiquement de + ou - 30°et le deuxième logement LG2 notamment en U peut comprendre une deuxième direction d'insertion D2 pour le tube avant 21, suivant une direction perpendiculaire à au plan moyen PM de la base, ou légèrement incliné par rapport à cette direction typiquement de + ou - 30°. La première direction d'insertion D1 et la deuxième direction d'insertion D2 sont inclinées l'une par rapport à l'autre d'un angle typiquement compris entre 45° et 90°.

Le premier logement LG 1notamment en U peut être formé par une gorge continue suivant la direction transversale, ou encore formé par plusieurs éléments notamment en U, discrètement espacés suivant la direction transversale Y. Le deuxième logement LG2 notamment en U peut être formé par une gorge continue suivant la direction transversale Y, ou encore formé par plusieurs éléments notamment en U, discrètement espacés suivant la direction transversale Y. Les différentes parois du U (notamment les parois latérales et la paroi de fond) peuvent être prévues au moins localement suivant la direction transversale Y, ou encore être décomposées suivant la direction transversale, à savoir que la première paroi latérale, la deuxième paroi latérale et la paroi de fond peuvent s'étendre respectivement suivant plusieurs sections discontinues suivant la direction transversale Y (mode de réalisation non illustré).

La matelassure 11 confrère le moelleux et le confort de l'assise, et peut être dans une matière telle que la mousse expansée de polyuréthane.

La matelassure peut comprendre :
- une portion centrale 110, s'étendant depuis un bord arrière et jusqu'à un bord avant de la base:
- une première matelassure latérale 111, formant un premier bord relevé, et
- une deuxième matelassure latérale 112 formant un deuxième bord relevé.
La première matelassure 111 et la deuxième matelassure 112 sont agencées de part et d'autre de la portion centrale 112, suivant la direction transversale Y, et ont pour fonction d'assurer un maintien latérale de l'occupant.

De manière générale, la matelassure 11, y compris la portion centrale 110, la première matelassure latérale 111 et la deuxième matelassure latérale 112 peut être formé par un élément d'un seul tenant, et notamment tel qu'illustré sur la vue de haut, à gauche de la figure 7.

Selon une variante, la première matelassure latérale 111 et/ou la deuxième matelassure latérale 112 peuvent être des éléments indépendants et amovibles par rapport à la portion centrale 110 de la matelassure 11. En cas de maintenance ; il est ainsi possible de changer uniquement l'élément usé de la matelassure en conservant les autres : par exemple, il est possible de changer la première matelassure latérale 111 et/ou la deuxième matelassure latérale112 qui ont tendance à s'user plus rapidement, en conservant la portion centrale 110.

La portion centrale de la matelassure peut encore comprendre une portion arrière 110b, fixe, et une portion avant 110a, mobile. La portion arrière 110b est fixé sur la base 10 alors qu'un système de glissière 18 peut être prévue entre la base 10 et la portion avant 110a. Ce système de glissière permet d'avancer ou de reculer la portion avant 110a de la portion centrale 110 par rapport à la portion arrière 110b

Le coussin modulaire peut encore comprendre, à l'état assemblé, tout ou partie des composants suivant :
- une nappe électrique chauffante 15, résistive, et/ou
- un système de ventilation 16 électrique, configuré pour souffler de l'air au travers d'évents dans ladite base, et/ou
- un système de massage 17, comprenant un ou plusieurs actionneurs mécaniques, et/ou
- un système d'exciteur haptique, comprenant un ou plusieurs exciteurs configuré(s) pour générer des vibrations dans ladite base.

Selon un mode de réalisation, la base 10 peut être un corps obtenu par moulage par injection ; ladite interface mécanique avant 14 et ladite interface mécanique arrière 13 peuvent être agencées respectivement sur la partie avant et arrière de la base 10, et être d'un seul tenant avec le corps, lesdites interfaces mécaniques arrière et avant 13,14 étant obtenues lors du moulage par injection. Alternativement, l'interface mécanique avant 14 et/ou l'interface mécanique arrière 13 peut être formées par des éléments rapportés sur le corps de la base 10.

Selon la présente divulgation ledit système d'interface mécanique est avantageusement configuré pour autoriser la fixation du coussin modulaire d'assise par les étapes suivantes :
/A/ mise en regard de l'interface mécanique arrière avec le tube arrière 22 et insertion du tube arrière 22 dans le premier logement en U LG1 et
/B/ pivotement du coussin modulaire 1 autour du tube arrière 22 alors emboité dans le premier logement LG1 de l'interface mécanique arrière 13 jusqu'à une insertion du tube avant 21 dans le deuxième logement LG2 de l'interface mécanique avant et verrouillage du tube avant 21 par le système de verrouillage.

La mise en place et la fixation du coussin modulaire d'assise à la structure de siège selon la présente divulgation est rapide, sûr et réalisé de préférence sans outil, en particulier pour les étapes /A/ et /B/.

De manière générale, le verrouillage mécanique du tube avant 21 peut nécessiter une opération de l'utilisateur supplémentaire au (simple) pivotement en /B/, par exemple, un déplacement d'un loquet du système de verrouillage à titre d'exemple non limitatif, ou la mise en place d'un organe de retenue, amovible de l'interface mécanique avant, tel qu'une patte de retenue.

Toutefois, et selon un mode de réalisation avantageux, le système de verrouillage peut être configuré pour assurer le verrouillage automatiquement lors du pivotement en /B/.

Selon un tel mode de réalisation, le système de verrouillage peut être élastiquement déformable, configuré pour autoriser un verrouillage élastique de sorte que le verrouillage du tube avant 21 dans le deuxième logement LG2 de l'interface mécanique avant est obtenu, en fin de course lors du pivotement en /B/ du coussin modulaire autour du tube arrière 22, par déformation élastique du système de verrouillage.

Ainsi, selon un mode de réalisation (non illustré), le deuxième logement, en particulier en U, LG2 peut être une gorge déformable élastiquement présentant une entrée de gorge de dimension inférieure au diamètre du tube avant 21, la gorge présentant une section intérieure ajustée à la section du tube avant 21 de dimension supérieure à l'entrée de gorge. Lors du pivotement en /B/ le tube avant 21 vient s'insérer dans l"entrée de gorge en la déformant élastiquement. Une fois le tube avant 21 reçu dans le deuxième logement de l'interface mécanique avant 14, l'entrée de gorge revient élastiquement en position en assurant le maintien du tube avant 21, verrouillé élastiquement dans le deuxième logement LG2.

Selon un autre mode de réalisation, ladite interface mécanique avant 14 peut comprendre un organe de verrouillage 140, articulé par une charnière 141, souple, à une extrémité proximale au corps de la base par rapport au deuxième logement et présentant une dent de verrouillage 142 à son extrémité distale, ainsi qu'une came 143 solidaire de l'organe de verrouillage 140.

Ledit organe de verrouillage 140 est configuré pour passer d'une position déverrouillée P1, laissant ouverte le deuxième logement LG2, illustrée à droite à la figure 5, jusqu'à une position verrouillée P2 obturant le deuxième logement LG2, illustrée à gauche à la figure 5.

A l'étape /B/ le tube avant 21 vient engager avec la came 143, lors de son insertion dans le deuxième logement, en provoquant le déplacement de l'organe de verrouillage 140 autour de la charnière 141 de la position déverrouillée P1 jusqu'à la position verrouillée P2 : au cours d'un tel déplacement, ledit organe de verrouillage 140 se déforme élastiquement en passant une contre-dent 144 de l'interface mécanique 14, solidaire de la base et jusqu'à la position verrouillé P2 pour laquelle ledit organe de verrouillage 140 se détend au moins partiellement dans une position où la dent de verrouillage 142 et la contre-dent 144 coopèrent entre eux pour interdire le déverrouillage de l'organe de verrouillage 140 dans une position où l'organe de verrouillage 140 maintient prisonnier ledit tube avant 21 dans le deuxième logement LG2.

L'organe de verrouillage 140 peut présenter une forme en L, la charnière 141 pourvue à une extrémité du L, la dent de verrouillage à une extrémité opposée du L. La came peut comprendre un bras qui s'étend globalement parallèle à l'aide inférieure du L et de sorte que le tube avant 21 se loge entre la came et l'aile inférieure du L lors de l'entrainement de la came.

La présente divulgation est encore relative à un ensemble de siège comprenant un coussin modulaire d'assise 1 et une structure de siège 2 présentant une structure d'assise comprenant deux flasques latéraux 30 entretoisés par un tube avant 21, transversal, et un tube arrière 22, transversal, voire une structure de dossier.

Le coussin modulaire d'assise comprend à l'état assemblé :
- ladite base 10, comprenant un système d'interface mécanique pour la fixation sur la structure d'assise,
- ladite matelassure 11 reposant sur une surface supérieure de la base
- le revêtement d'habillage 12 recouvrant la matelassure.

Le système d'interface mécanique comprend :
- ladite interface mécanique arrière 13, sur une partie arrière de la base, comprenant le premier logement LG1, ouvert, configuré pour loger le tube arrière, de manière pivotable autour du tube arrière 22,
- ladite interface mécanique avant 14, sur une partie avant de la base, configuré pour loger le tube avant, dans le deuxième logement LG2, ouvert, de manière verrouillable.

Ledit système d'interface mécanique est configuré pour autoriser la fixation du coussin modulaire par les étapes suivantes :
/A/ mise en regard de l'interface mécanique arrière 13 avec le tube arrière 22 et insertion du tube arrière dans le premier logement LG1 et
/B/ pivotement du coussin modulaire autour du tube arrière 22 emboité dans le premier logement LG1, notamment en U, de l'interface mécanique arrière jusqu'à insertion du tube avant 21 dans le deuxième logement LG2, notamment en U, de l'interface mécanique avant et verrouillage mécanique par ledit système de verrouillage de l'interface mécanique avant 14.

De manière générale le verrouillage mécanique peut nécessiter une opération de l'utilisateur supplémentaire au simple pivotement, par exemple, un déplacement d'un loquet du système de verrouillage, ou encore la mise en place d'un organe de retenue.

Toutefois et selon un mode de réalisation, le système de verrouillage peut être configuré pour assurer le verrouillage automatiquement lors du pivotement en /B/.

Selon un tel mode de réalisation, le système de verrouillage peut être élastiquement déformable, configuré pour autoriser un verrouillage élastique de sorte que le verrouillage du tube avant 21 dans le deuxième logement LG2 de l'interface mécanique avant est obtenu, en fin de course lors du pivotement en /B/ du coussin modulaire autour du tube arrière 22, par déformation élastique du système de verrouillage.

La présente divulgation concerne encore un procédé d'obtention d'un ensemble de siège selon la présente divulgation, à l'état assemblé (à savoir du coussin modulaire sur la structure d'assise) comprenant les étapes suivantes :
- fourniture d'un coussin modulaire d'assise 1 comprenant à l'état assemblé au moins une base 10, comprenant un système d'interface mécanique pour la fixation sur la structure d'assise, une matelassure 11 reposant sur une surface supérieure de la base, voire un revêtement d'habillage 12 recouvrant la matelassure, ledit système d'interface mécanique comprenant une interface mécanique arrière 13, sur une partie arrière de la base, comprenant un premier logement LG1 configuré pour loger le tube arrière 22, de manière pivotable autour du tube arrière 22, et une interface mécanique avant 14 sur une partie avant de la base, configurée pour loger le tube avant 21, dans un deuxième logement LG2 de manière verrouillable,
- fourniture d'une structure de siège 2, à l'état assemblé, comprenant une structure d'assise et une structure de dossier, la structure d'assise comprenant deux flasques latéraux 20 entretoisés par un tube avant 21, transversal, et un tube arrière 22 transversal,
- assemblage du coussin modulaire à ladite structure de siège par mise en oeuvre des étapes suivantes :
   /A/ mise en regard de l'interface mécanique arrière 13 avec le tube arrière 22 et insertion du tube arrière 22 dans le premier logement LG1 et
   /B/ pivotement du coussin modulaire 1 autour du tube arrière 22 alors emboité dans le premier logement en U LG1 de l'interface mécanique arrière 13 jusqu'à insertion du tube avant 21 dans le deuxième logement LG2 de l'interface mécanique avant 14 et verrouillage mécanique du tube avant dans le deuxième logement LG2 par le système de verrouillage l'interface mécanique avant 14.

L'assemblage entre le coussin modulaire et la structure de siège, peut autoriser encore un démontage rapide, et avantageusement un démontage du coussin modulaire sans démontage de la structure de siège au plancher du véhicule.

Aussi, la présente divulgation est encore relative à un procédé de maintenance d'un ensemble de siège selon la présente divulgation, comprenant le désassemblage du coussin modulaire 1 de la structure de siège 2, sans démontage de la structure de siège à un plancher du véhicule par la mise en oeuvre des étapes suivantes :
ICI déverrouillage du système de verrouillage, libération du tube avant 21 de l'interface mécanique avant 14 et rotation du coussin modulaire 1 autour du tube arrière 22 logé dans le premier logement LG1 jusqu'à obtenir l'échappement du tube avant 21 en dehors du deuxième logement en U LG2, et successivement
/D/ retrait du coussin modulaire par extraction du tube arrière 22 du premier logement LG1 de l'interface mécanique arrière 13.

Un tel retrait du coussin modulaire, sans démontage de la structure du siège autorise une maintenance aisée du coussin, par remplacement d'un ou plusieurs éléments usés, par exemple remplacement d'un ou plusieurs garnitures, par substitution d'un coussin modulaire neuf, voire agrémenté d'équipement de confort, tel que la nappe chauffante résistive, le système de ventilation, ou encore le système de massage, ou encore le système comportant un ou plusieurs exciteurs haptiques.

### Liste des signes de référence

- 1 : Coussin modulaire d'assise,
- 10 Base,
- 100. Système de suspension,
- 101. Portion élastique ajourée,
- 102. Portion ajourée,
- 103 Système ressort, métallique
- 11. Matelassure,
- 110. Portion centrale,
- 110a, 110b. Portion avant et portion arrière,
- 112, 113. Première matelassure latérale et deuxième matelassure latérale,
- 12. Revêtement d'habillage,
- 13. Interface mécanique arrière,
- LG1. Premier logement (interface mécanique avant),
- 14. Interface mécanique avant,
- 140. Organe de verrouillage,
- 141. Charnière en particulier souple ;
- 142. Dent de verrouillage,
- 143. Came,
- 144. Contre dent
- LG2. Deuxième logement (interface mécanique arrière),
- 15. Nappe résistive chauffante,
- 16. Ventilateur,
- 17. Système de massage à actionneurs,
- 18 Système de glissière
- 2. Structure de siège,
- 20. Flasques (structure d'assise)
- 21,22. Respectivement, tube avant et tube arrière, transversaux (structure d'assise),
- Bar, Bav. Bord arrière et bord avant,
- BL1, BL2. Premier bord latéral et deuxième bord latéral.

## Revendications

1. Coussin modulaire d'assise (1), configuré pour être fixé à une structure de siège (2) présentant une structure d'assise comprenant deux flasques latéraux (20) entretoisés par un tube avant (21), transversal, et un tube arrière (22), transversal,
ledit coussin modulaire d'assise comprenant, à l'état assemblé:
- une base (10), comprenant un système d'interface mécanique pour la fixation sur la structure d'assise,
- une matelassure (11) reposant sur une surface supérieure de la base,
- un revêtement d'habillage (12) recouvrant la matelassure,
et dans lequel ledit système d'interface mécanique comprend :
- une interface mécanique arrière (13), sur une partie arrière de la base (10), comprenant un premier logement (LG1), ouvert, configuré pour loger le tube arrière (22), de manière pivotable autour du tube arrière (22),
- une interface mécanique avant (14), sur une partie avant de la base (10), comprenant un deuxième logement (LG2), ouvert, configuré pour loger le tube avant (21) de manière verrouillable mécaniquement par un système de verrouillage de l'interface mécanique avant (14),
et dans lequel ledit système d'interface mécanique est configuré pour autoriser la fixation du coussin modulaire d'assise par les étapes suivantes :
/A/ mise en regard de l'interface mécanique arrière (13) avec le tube arrière (22) et insertion du tube arrière (22) dans le premier logement (LG1), et
/B/ pivotement du coussin modulaire (1) autour du tube arrière (22) alors emboité dans le premier logement (LG1) de l'interface mécanique arrière (13) jusqu'à une insertion du tube avant (21) dans le deuxième logement (LG2) de l'interface mécanique avant (14), et verrouillage mécanique du tube avant (21) dans le deuxième logement (LG2) par ledit système de verrouillage de l'interface mécanique avant (14).

2. Coussin modulaire (1) selon la revendication 1, dans lequel ledit système de verrouillage de l'interface mécanique avant (14) est élastiquement déformable, configuré pour autoriser un verrouillage élastique de sorte que le verrouillage du tube avant (21) dans le deuxième logement (LG2) est obtenu, en fin de course lors du pivotement effectué à l'étape /B/ du coussin modulaire autour du tube arrière (22), par déformation élastique du système de verrouillage.

3. Coussin modulaire (1) selon la revendication 1 ou 2, le premier logement (LG1) est un logement ouvert en forme de U, et/ou le deuxième logement (LG2) est un logement ouvert en forme de U.

4. Coussin modulaire (1) selon la revendication 3 dans lequel le premier logement en U (LG1) débouche vers l'arrière de la base (10) selon un sens arrière orienté de la portion avant vers la portion arrière de la base (10), le premier logement en U (LG1) présentant une paroi latérale supérieure et une paroi latérale inférieure opposées, ainsi qu'une paroi de fond, ledit logement en U étant configuré de sorte à assurer un maintien stable du tube arrière (22) contre la paroi de fond lorsque la base (10) exerce un effort sur le tube arrière (22) dirigé selon le sens arrière, le tube arrière (22) alors bloqué selon une direction perpendiculaire à la base entre la paroi latérale supérieure et la paroi latérale inférieure.

5. Coussin modulaire (1) selon l'une quelconque des revendications précédentes, dans lequel la base (10) est un corps, de préférence mince, qui s'étend d'un bord arrière (Bar) à un bord avant (Bav), et d'un premier bord latéral (BLI1) à un deuxième bord latéral (BL2), et dans lequel le premier logement (LG1) ouvert débouche vers l'arrière de la base (10), et le deuxième logement (LG2) ouvert débouche vers le dessous, et dans lequel le premier logement (LG1) comprend une première direction d'insertion (D1) pour le tube arrière (22) et le deuxième logement (LG2) comprend une deuxième direction d'insertion (D2) pour le tube avant (21), et dans lequel la première direction d'insertion (D1) et la deuxième direction d'insertion (D2) sont inclinées l'une par rapport à l'autre d'un angle compris entre 45° et 90°.

6. Coussin modulaire (1) selon l'une des revendications 1 à 5 dans lequel la base (10) est un corps obtenu par moulage par injection, et dans lequel ladite interface mécanique avant (14) et ladite interface mécanique arrière (13) sont agencées respectivement sur la partie avant et arrière de la base (10), d'un seul tenant avec le corps, lesdites interfaces mécaniques arrière et avant (13,14) étant obtenues lors du moulage par injection.

7. Coussin modulaire (1) selon l'une des revendications 1 à 6, dans lequel le système de verrouillage de ladite interface mécanique avant (14) comprend un organe de verrouillage (140), articulé par une charnière (141), souple, à une extrémité proximale au corps de la base par rapport au deuxième logement et présentant une dent de verrouillage (142) à son extrémité distale, ainsi qu'une came (143) solidaire de l'organe de verrouillage (140), et dans lequel ledit organe de verrouillage (140) est configuré pour passer d'une position déverrouillée (P1), laissant ouverte le deuxième logement jusqu'à une position verrouillée (P2) obturant le deuxième logement (LG2), de sorte qu'à l'étape /B/, le tube avant (21) vient engager avec la came (143), lors de son insertion dans le deuxième logement, en provoquant le déplacement de l'organe de verrouillage (140) autour de la charnière (141) de la position déverrouillée (P1) jusqu'à la position verrouillée (P2) au cours duquel ledit organe de verrouillage (140) se déforme élastiquement en passant une contre-dent (144) de l'interface mécanique, solidaire de la base et jusqu'à la position verrouillée (P2) pour laquelle ledit organe de verrouillage (140) se détend au moins partiellement dans une position où la dent de verrouillage (142) et la contre-dent (144) coopèrent pour interdire le déverrouillage de l'organe de verrouillage (140) dans une position où l'organe de verrouillage (140) maintient prisonnier ledit tube avant (21) dans le deuxième logement (LG2).

8. Coussin modulaire (1) selon la revendication 2, prise seule ou en combinaison avec l'une des revendications 3 à 6, dans lequel le système de verrouillage de ladite interface mécanique avant (14) comprend une gorge du deuxième logement (LG2) déformable élastiquement présentant une entrée de gorge de dimension inférieure au diamètre du tube avant (21), la gorge présentant une section intérieure ajustée à la section du tube avant (21) de dimension supérieure à l'entrée de gorge configurée de sorte que lors du pivotement en étape /B/, le tube avant (21) vient s'insérer dans l"entrée de gorge en la déformant élastiquement, et qu'une fois le tube avant (21) reçu dans le deuxième logement de l'interface mécanique avant (14), l'entrée de gorge revient élastiquement en position en assurant le maintien du tube avant (21), verrouillé élastiquement dans le deuxième logement (LG2) .

9. Coussin modulaire (1) selon l'une des revendications 1 à 8, dans lequel la base est un corps moulé par injection et dans lequel la base (10) comprend un système de suspension (100) sur une portion centrale de la base (10) entre un premier bord latéral (BL1) et un deuxième bord latéral (BL2) du corps et dans lequel le système de suspension (100) est obtenu lors du moulage par injection, et consiste en une portion élastique (101) ajourée de la base, s'étendant, sur une portion centrale, entre le premier bord latéral (BL1) et le deuxième bord latéral (BL2) à proximité du bord arrière par comparaison au bord avant

10. Coussin modulaire (1) selon l'une des revendications 1 à 8, dans lequel la base (10) comprend un système de suspension (100) sur une portion centrale de la base entre un premier bord latéral et un deuxième bord latéral du corps et dans le système de suspension (10) comprend :
- une portion ajourée (102) de la base, s'étendant, sur une portion centrale, entre le premier bord latéral et le deuxième bord latéral à proximité du bord arrière par comparaison au bord avant,
- un système ressort (103), métallique, couvrant la portion ajourée, fixé au corps de la base de part et d'autre de la portion ajourée.

11. Ensemble de siège comprenant un coussin modulaire d'assise (1) selon l'une des revendications 1 à 10 et une structure de siège (2) présentant une structure d'assise comprenant deux flasques latéraux (20) entretoisés par un tube avant (21), transversal, et un tube arrière (22), transversal, et dans lequel,
ledit coussin modulaire d'assise comprenant, à l'état assemblé:
- ladite base (10), comprenant le système d'interface mécanique pour la fixation sur la structure d'assise,
- ladite matelassure (11) reposant sur la surface supérieure de la base
- le revêtement d'habillage (12) recouvrant la matelassure
et dans lequel ledit système d'interface mécanique comprend :
- ladite interface mécanique arrière (13), sur la partie arrière de la base, comprenant le premier logement (LG1), ouvert, configuré pour loger le tube arrière, de manière pivotable autour du tube arrière (22),
- ladite interface mécanique avant (14), sur une partie avant de la base, configurée pour loger le tube avant, dans le deuxième logement (LG2), ouvert, de manière verrouillable par le système de verrouillage,
et dans lequel ledit système d'interface mécanique est configuré pour autoriser la fixation du coussin modulaire par les étapes suivantes :
/A/ mise en regard de l'interface mécanique arrière (13) avec le tube arrière (22) et insertion du tube arrière dans le premier logement (LG1) et
/B/ pivotement du coussin modulaire autour du tube arrière (22) emboité dans le premier logement (LG1) de l'interface mécanique arrière jusqu'à insertion du tube avant (21) dans le deuxième logement (LG2) de l'interface mécanique avant et verrouillage mécanique du tube avant (21) dans le deuxième logement(LG2) par le système de verrouillage.

12. Procédé d'obtention d'un ensemble de siège selon la revendication 11 à l'état assemblé comprenant les étapes suivantes :
- fourniture d'un coussin modulaire d'assise (1) comprenant à l'état assemblé au moins une base (10) comprenant un système d'interface mécanique pour la fixation sur la structure d'assise, une matelassure (11) reposant sur une surface supérieure de la base et un revêtement d'habillage (12) recouvrant la matelassure, ledit système d'interface mécanique comprenant une interface mécanique arrière (13), sur une partie arrière de la base, comprenant un premier logement (LG1) configuré pour loger le tube arrière (22), de manière pivotable autour du tube arrière (22), et une interface mécanique avant (14) sur une partie avant de la base, configurée pour loger le tube avant (21), dans un deuxième logement (LG2) de manière verrouillable,
- fourniture d'une structure de siège (2), à l'état assemblé, comprenant une structure d'assise et une structure de dossier, la structure d'assise comprenant deux flasques latéraux (20) entretoisés par un tube avant (21), transversal, et un tube arrière (22) transversal,
- assemblage du coussin modulaire à ladite structure de siège par mise en oeuvre des étapes suivantes :
/A/ mise en regard de l'interface mécanique arrière (13) avec le tube arrière (22) et insertion du tube arrière (22) dans le premier logement (LG1) et
/B/ pivotement du coussin modulaire (1) autour du tube arrière (22) alors emboité dans le premier logement (LG1) de l'interface mécanique arrière (13) jusqu'à insertion du tube avant (21) dans le deuxième logement (LG2) de l'interface mécanique avant (14) et verrouillage par un système de verrouillage de l'interface mécanique avant (14).

13. Procédé de maintenance d'un ensemble de siège selon la revendication 11, comprenant le désassemblage du coussin modulaire (1) de la structure de siège (2), sans démontage de la structure de siège à un plancher du véhicule par la mise en oeuvre des étapes suivantes :
ICI déverrouillage du système de verrouillage, libération du tube avant (21) de l'interface mécanique avant (14) et rotation du coussin modulaire (1) autour du tube arrière (22) logé dans le premier logement (LG1) jusqu'à obtenir l'échappement du tube avant (21) en dehors du deuxième logement (LG2), et successivement
/D/ retrait du coussin modulaire par extraction du tube arrière (22) du premier logement (LG1) de l'interface mécanique arrière (13).
